# EUROPÄISCHE PATENTSCHRIFT

(11) **EP 4 124 436 B1**
(45) Veröffentlichungstag und Bekanntmachung des Hinweises auf die Patenterteilung: **30.08.2023**
(21) Anmeldenummer: 21188653.6
(22) Anmeldetag: 30.07.2021
(51) Int. Cl.: B29C 45/27

(54) **HEISSKANALDÜSE**
HOT RUNNER NOZZLE
BUSE DE CANAL CHAUD

(43) Veröffentlichungstag der Anmeldung: 01.02.2023
(73) Patentinhaber: Witosa GmbH, 35066 Frankenberg/Wangershausen (DE)
(72) Erfinder: GLITTENBERG, Torsten, 35066 Frankenberg (DE); HALLENBERGER, Martin, 35088 Frohnhausen (DE)
(74) Vertreter: Walther Bayer Faber Patentanwälte PartGmbB

(56) Entgegenhaltungen:
- WO-A1-2010/014485
- CN-A- 111 958 928
- US-A1- 2010 015 275

## Beschreibung

Die Erfindung betrifft eine Heißkanaldüse für Spritzgießformen, aufweisend ein Düsenrohr, in dem ein Durchtrittskanal zum Durchtritt einer Kunststoffschmelze ausgebildet ist, wobei sich der Durchtrittskanal von einer rückseitigen Kanaleintrittsseite bis zu einer vorderseitigen Düsenspitze entlang einer Mittelachse erstreckt und in wenigstens einem Austrittskanal in der Düsenspitze mündet, durch den die Kunststoffschmelze austreibbar ist, wobei ein Anlagekragen zur dichtenden Anlage gegen die Spritzgießform vorgesehen ist, und wobei wenigstens das Düsenrohr mittels eines generativen Fertigungsverfahrens als einteiliger Grundkörper hergestellt ist.

### STAND DER TECHNIK

Aus der DE 10 2006 029 152 A1 ist eine gattungsbildende Heißkanaldüse für Spritzgießformen bekannt. Derartige Heißkanaldüsen dienen dazu, eine vorgeheizte, plastifizierte Kunststoffmasse in eine Spritzgießform einzuspritzen, wobei die Heißkanaldüse mit der Düsenspitze in die Kavität der Spritzgießform mündet. Ist der Spritzguss erfolgt, so schließt sich eine Abkühlphase an, während der die Kunststoffschmelze für den bereits nächsten Spritzgussschritt in der Heißkanaldüse im plastifizierten Zustand vorgehalten werden muss. Hierzu ist die Heißkanaldüse beheizt, wobei moderne, insbesondere hoch additivierte Kunststoffe in einem nur schmalen Temperaturband vorgehalten werden dürfen, ohne dass die Kunststoffschmelze bei zu niedriger Temperatur entweder bereits erstarrt und der Folgeprozess unmöglich wird oder die Kunststoffmasse überhitzt, sodass sich insbesondere aufadditivierte Bestandteile der Kunststoffmasse zersetzen und die späteren Spezifikationen eines aus der Kunststoffmasse gespritzten Bauteils nicht eingehalten werden können.

Daraus ergibt sich die Forderung, eine Heißkanaldüse über der möglichst gesamten Länge von der Kanaleintrittsseite bis zur Düsenspitze so zu beheizen, dass sich eine gleichmäßige Temperaturverteilung ergibt, auch wenn der Anlagekragen im Bereich der Düsenspitze gegen die Spritzgießform dichtend zur Anlage gebracht ist und durch die kalte Spritzgießform auskühlen kann. Folgerichtig ergibt sich insbesondere die Schwierigkeit, die Düsenspitze derart zu temperieren, dass diese trotz der Wärmeableitung über die Anlage des Anlagekragens zur Spritzgießform die geforderte Temperatur hält, ohne dass sich über der Längserstreckung des Düsenrohrs entlang der Mittelachse in gewisser Weise ein Temperaturbauch ergibt, und sich der Kunststoff im Durchtrittskanal auf der Länge des Düsenrohres überhitzt und damit zersetzt.

Die EP 2 655 037 B1 offenbart eine Heißkanaldüse für Spritzgießformen, die über ihrer Länge von der Kanaleintrittsseite bis zur Düsenspitze ebenfalls eine möglichst gleichmäßige Temperaturverteilung aufweisen soll. Um diese Forderung zu erfüllen, wird vorgeschlagen, im Bereich des Düsenrohres Hohlräume zu schaffen, wofür ein generatives Fertigungsverfahren zum Einsatz gebracht wird, mit dem derartige Hohlräume vorteilhaft hergestellt werden können. Es ist dabei angegeben, dass der einen Hohlraum umgebende Teilbereich des Grundkörpers der Heißkanaldüse einteilig ausgeführt sein kann, wobei die Heißkanaldüse insgesamt mehrteilig ausgestaltet ist und aus einer Anzahl von Einzelteilen zusammengesetzt wurde.

So wird ein Düsenrohr bereitgestellt, an das sich an der Kanaleintrittsseite ein Düsensitz anschließt, und an den Düsensitz schließt sich ein Düsenträger an, wobei diese Komponenten jeweils miteinander gefügt werden müssen. Auf der Seite der Düsenspitze ist ein Isolierring gezeigt, der an der düsenspitzenseitigen Stirnfläche des Düsenrohres angebracht ist, und an den Isolierring schließt sich schließlich der eigentliche Düsenendabschnitt als Einzelteil an. Dadurch ergibt sich ein aufwendiger Aufbau der Heißkanaldüse, wobei die Werkstoffe, insbesondere der Düsenspitze und des Düsenrohres den jeweiligen Anforderungen angepasst ausgewählt werden, beispielsweise wird für die Düsenspitze bevorzugt ein verschleißfestes Material gewählt, während für das Düsenrohr ein Material mit einer hohen Wärmeleitfähigkeit gewählt wird, um eine homogene Temperaturverteilung zu begünstigen. Dennoch ist eine Einteiligkeit des Grundkörpers der Heißkanaldüse nicht gegeben, durch die sich erst der einfache Aufbau und die insofern einfache Herstellung ergibt.

Die US 2016/0151948 A1 offenbart eine Heißkanaldüse für Spritzgießformen, aufweisend ein Düsenrohr, in dem ein Durchtrittskanal zum Durchtritt einer Kunststoffschmelze ausgebildet ist, wobei sich der Durchtrittskanal von einer rückseitigen Kanaleintrittsseite bis zu einer vorderseitigen Düsenspitze entlang einer Mittelachse erstreckt und in wenigstens einem Austrittskanal in der Düsenspitze mündet, durch den die Kunststoffschmelze austreibbar ist, wobei ein Anlagekragen zur dichtenden Anlage gegen eine Werkzeugform vorgesehen ist, und wobei wenigstens das Düsenrohr, die Düsenspitze und der Anlagekragen mittels eines generativen Fertigungsverfahrens als einteiliger Grundkörper hergestellt sind. Nachteilhafterweise ergibt sich auch bei dieser vorbekannten Heißkanaldüse keine optimale Wärmeverteilung im Düsenrohr bis in die Düsenspitze hinein. Entscheidend ist dabei eine Optimierung des Zusammenspiels zwischen der Wärmeeinbringung durch die Kunststoffschmelze selbst und die Wärmeeinbringung durch den Heizdraht, der Auskühlung der Heißkanaldüse durch die Einbauumgebung, insbesondere über den Anlagekragen, und das Wärmeverteilungsverhalten im Grundkörper, der die Heißkanaldüse im Wesentlichen vollständig bildet.

Aus der US 2010/0015275 A1 ist eine Heißkanaldüse für Spritzgießformen bekannt, wobei das Düsenrohr mehrteilig ausgeführt ist, wobei die einzelnen Teile des Düsenrohres miteinander verschraubt sind. Das Düsenrohr bildet dabei ein außenseitiges, mehrteiliges Gehäuse, in das ein innerer Rohrkörper eingesetzt ist, wobei zwischen der Innenseite des äußeren Düsenrohres und dem inneren Rohrkörper ein umlaufender Hohlraum vorgesehen ist, in dem ein Heizelement eingebracht ist, das den inneren Rohrkörper tubusartig umschließt. Der innere Rohrkörper und der äußere Rohrkörper in Form des Gehäuses der Heißkanaldüse sind auf konventionelle Weise hergestellt, wobei angegeben ist, dass die Düsenspitze mit dem Anlagekragen mittels eines generativen Fertigungsverfahren hergestellt wird. Nachteilhafterweise ist der Gesamtaufbau der Heißkanaldüse aufwendig, weist eine Vielzahl von Teilen auf und muss mit einer Vielzahl von einzelnen Arbeitsschritten montiert werden.

Die Druckschrift WO 2010/014485 A1 offenbart eine weitere Ausführungsform einer Heißkanaldüse für Spritzgießformen, aufweisend ein Düsenrohr, indem ein Durchtrittskanal zum Durchtritt einer Kunststoffschmelze ausgebildet ist, wobei sich der Durchtrittskanal von einer rückseitigen Kanaleintrittsseite bis zu einer vorderseitigen Düsenspitze entlang einer Mittelachse erstreckt und in wenigstens einem Austrittskanal in der Düsenspitze mündet, durch den die Kunststoffschmelze austreibbar ist, wobei ein Anlagekragen zur dichtenden Anlage gegen die Spritzgießform vorgesehen ist. Das Düsenrohr, die Düsenspitze und weitere Bestandteile der Heißkanaldüse sind aus einer Vielzahl von Einzelteilen gebildet, die miteinander montiert werden müssen. Das Düsenrohr weist dabei einen massiven inneren Rohrkörper zum Durchtritt der Kunststoffschmelze auf, der unter Bildung eines umlaufenden Hohlraums von einem dünnwandigen äußeren Rohrkörper umgeben ist. Im äußeren Rohrkörper sind Heißelemente eingebracht, die so verteilt sind, dass eine möglichst optimale Temperaturverteilung im inneren Rohrkörper erzeugt wird. Der Aufbau der Heißkanaldüse ist auf konventionelle Weise offenbart, insbesondere werden die metallischen Bauteile mittels insbesondere spanabnehmenden Verfahrens hergestellt.

### OFFENBARUNG DER ERFINDUNG

Die Aufgabe der Erfindung besteht in der weiteren Verbesserung einer Heißkanaldüse mit einem einfachen Aufbau und einer geometrischen Ausgestaltung, bei der ein Temperaturprofil erzeugbar ist, bei dem ein ungewolltes Erstarren der Kunststoffschmelze im Durchtrittskanal unterbunden wird und bei dem zugleich die Kunststoffschmelze nicht überhitzt. Dabei soll die Heißkanaldüse möglichst einfach aufgebaut sein, im generativen Fertigungsverfahren vorteilhaft herstellbar sein und hohen mechanischen Kräften standhalten können.

Erfindungsgemäß weist das Düsenrohr einen inneren Rohrkörper auf, in dem der Durchtrittskanal ausgebildet ist und wobei das Düsenrohr weiterhin einen den inneren Rohrkörper umschließenden äußeren Rohrkörper aufweist, sodass sich zwischen dem inneren Rohrkörper und dem äußeren Rohrkörper ein umlaufender Hohlraum erstreckt. Der erfindungsgemäße Aufbau der Heißkanaldüse weist über große Abschnitte des Düsenrohres zwei konzentrische Rohrkörper auf, nämlich einen inneren Rohrkörper, in dem der Durchtrittskanal ausgebildet ist und durch den die Kunststoffschmelze hindurchgeführt wird, und einen äußeren Rohrkörper, der den inneren Rohrkörper konzentrisch umgibt. Der äußere Rohrkörper nimmt mechanische Kräfte der Heißkanaldüse auf und dient zudem dazu, die Temperaturverteilung innerhalb des Grundkörpers so auszubilden, dass im Einsatz der Heißkanaldüse der innere Rohrkörper und damit der Durchtrittskanal für die Kunststoffschmelze als auch der Bereich der Düsenspitze und Bereich der Kanaleintrittsseite eine insgesamt homogene Temperatur aufweisen. Die Homogenität der Temperatur über der gesamten Führungslänge der Kunststoffschmelze von der Kanaleintrittsseite bis zur Düsenspitze wird mit dem umlaufenden Hohlraum in besonderer Weise gewährleistet, da die Geometrie des äußeren Rohrkörpers als thermische Umgebung des inneren Rohrkörpers so angepasst werden kann, dass die Kunststoffschmelze die Heißkanaldüse mit einer im Wesentlichen konstanten Temperatur durchtreten kann.

Grundgedanke ist dabei ein über seiner länglichen Erstreckung entlang der Mittelachse im Querschnitt konstanter innerer Rohrkörper, während der äußere Rohrkörper in seiner Querschnittsgeometrie variiert und so angepasst ist, dass sich schließlich eine konstante Temperatur des inneren Rohrkörpers beim Hindurchtreten der Kunststoffschmelze bis hin zur Düsenspitze ergibt.

Der Anlagekragen kann dabei einen radial nach außen geformten, kragenartigen Bereich aufweisen, mit dem dieser gegen das Spritzgießwerkzeug anliegt. Im Sinne der vorliegenden Erfindung umfasst der Anlagekragen aber auch solche Anlagebereiche oder Anformungen, die beispielsweise zylindrisch ausgeführt sind, und die eigentliche Kragenform ist vorliegend nicht zwingend Bestandteil des Anlagekragens. Der Anlagekragen gemäß der Erfindung betrifft insoweit alle möglichen Anlagebereiche einer Heißkanaldüse, die zur Anlage gegen ein Spritzgießwerkzeug vorgesehen sind, auch solche, die nicht direkt eine kragenartige Ausformung aufweisen, etwa zylindrische Außendichtungen.

Die Düsenspitze umfasst im Sinne der vorliegenden Erfindung auch alle Abwandlungen von einer Spitzenform, beispielsweise umfasst die Düsenspitze im Sinne der Erfindung auch Mündungsöffnungen oder sonstige Formen von Öffnungen, die dazu ausgebildet sind, eine plastifizierte Kunststoffschmelze in die Kavität einer Spritzgießform zu spritzen. Insofern sind vorliegend mit der beschriebenen Düsenspitze auch Mündungsöffnungen mit umfasst, die beispielsweise bei Heißkanaldüsen mit einem Nadelverschluss auftreten.

Insbesondere ist zur Erzeugung einer gleichförmigen Temperatur entlang des inneren Rohrkörpers vorgesehen, dass der umlaufende Hohlraum zwischen dem inneren Rohrkörper und dem äußeren Rohrkörper ein radiales Maß aufweist, das von der Kanaleintrittsseite zur Düsenspitze hin stufenweise oder bevorzugt kontinuierlich größer wird. Insofern kann der innere Rohrkörper einen über seiner Länge gleichbleibenden Außendurchmesser aufweisen, während der äußere Rohrkörper über seiner Länge einen in Richtung zur Düsenspitze hin größer werdenden Innendurchmesser aufweist, sodass die Wandstärke des äußeren Rohrkörpers in Richtung zur Düsenspitze hin abnimmt. Die Vergrößerung des Innendurchmessers muss dabei nicht kontinuierlich ausgeführt sein und es können auch Stufen oder sonstige Abweichungen vorhanden sein.

Der innere und äußere Rohrkörper muss im Rahmen möglicher Ausführungsformen nicht zwingend eine kreisrunde Innen- oder Außenfläche aufweisen und die Konturen der Rohrkörper können auch von einer Kreisform abweichen. Beispielsweise können der innere und äußere Rohrkörper mit der Innen- oder Außenfläche ein Polygon oder eine Wellenkontur bilden.

Die Ausbildung des umlaufenden Hohlraums erstreckt sich im Wesentlichen von der Kanaleintrittsseite bis hin zur Düsenspitze, sodass die axiale Länge des umlaufenden Hohlraums in der Erstreckungsrichtung der Mittelachse etwa 40% bis 90% der Gesamtlänge der Heißkanaldüse beträgt, vorzugsweise etwa 70% bis 80%. Insbesondere reicht der umlaufende Hohlraum bis unter die Düsenspitze, sodass der Durchtrittskanal den umlaufenden Hohlraum nur unwesentlich überragt, bevor dieser in den Austrittskanal in der Düsenspitze übergeht.

Der Hohlraum kann dabei Unterbrechungen aufweisen, sodass dieser im Sinne der Erfindung auch mit geometrischen Unterbrechungen noch als ein umlaufender Hohlraum bezeichnet wird. Beispielsweise können Unterbrechungen im Hohlraum vorhanden sein, etwa in Anbetracht der Führung von Heizdrähten oder von Signalkabeln, Stabilisierungsstege und dergleichen.

In Richtung zur Kanaleintrittsseite können sich die Innenfläche des äußeren Rohrkörpers und die Außenfläche des inneren Rohrkörpers soweit annähern, dass diese sich in einem Übergangsbereich treffen und in einen einteiligen, dickwandigeren Bereich übergehen. Hingegen können die Innenfläche des äußeren Rohrkörpers und die Außenfläche des inneren Rohrkörpers unterhalb der Düsenspitze etwa parallel zueinander bis unter die Düsenspitze verlaufen, sodass der Übergang in einer Kehle gebildet wird. Insbesondere kann die Außenfläche des inneren Rohrkörpers und die Innenfläche des äußeren Rohrkörpers in einem nahe der Kanaleintrittsseite liegenden Übergangsbereich zu einer unterbrechungsfreien gemeinsamen Rohrwandung des Düsenrohres übergehen, sodass sich in Richtung zur Kanaleintrittsseite ein dickwandiger Sockelabschnitt an den inneren und äußeren Rohrkörper anschließt.

Die Dickwandigkeit des Sockelabschnitts beschreibt dabei eine Wanddicke, die dicker ist als die Wanddicke des inneren Rohrkörpers und dicker ist als die Wanddicke des äußeren Rohrkörpers, insbesondere dicker ist als die Summe des inneren Rohrkörpers und des äußeren Rohrkörpers. Der Sockelabschnitt kann dabei Unterbrechungen aufweisen, insbesondere zur Führung von Heizdrähten und Sensorkabeln oder der Sockelabschnitt weist sonstige von einer Zylinderfläche abweichende Ausgestaltungen auf seiner Außenumfangsfläche auf.

Der Sockelabschnitt endet unterseitig mit der Kanaleintrittsseite, wobei eine Befestigungsmutter verliersicher auf dem Sockelabschnitt aufgebracht ist. Der Sockelabschnitt bildet dabei lediglich einen Abschnitt des Grundkörpers, der Bestandteil des Düsenrohres ist, und der Sockelabschnitt beginnt unterseitig mit der Kanaleintrittsseite und endet mit dem Beginn des umlaufenden Spaltes im Übergangsbereich, ab dem sich das Düsenrohr mit dem äußeren Rohrkörper und mit dem inneren Rohrkörper in Richtung zur Düsenspitze fortsetzt.

Die Befestigungsmutter wird gemeinsam mit dem Grundkörper im generativen Fertigungsverfahren simultan hergestellt, wofür die Befestigungsmutter zunächst mittels wenigstens einem durchtrennbaren Haltemittel mit dem Sockelabschnitt verbunden ist. Im Rahmen einer spanenden Endbearbeitung der Heißkanaldüse nach der Herstellung mittels des generativen Fertigungsverfahrens können die Haltemittel mechanisch durchtrennt werden, sodass die Befestigungsmutter gegenüber dem Grundkörper vereinzelt ist, jedoch sitzt die Befestigungsmutter formschlüssig auf dem Düsenrohr, insbesondere im Bereich des Sockelabschnittes.

Ein weiterer Vorteil wird erreicht, wenn der äußere Rohrkörper eine Wabenstruktur aufweist. Die Wabenstruktur bildet Öffnungen im äußeren Rohrkörper, die eine sechseckige Kontur aufweisen, wobei im Sinne der Erfindung die Öffnungen auch kreisförmig oder oval ausfallen können. Die Öffnungen bilden dabei zunächst einen freien Durchgang vom umlaufenden Hohlraum zur Außenseite des äußeren Rohrkörpers, die alternativ auch verschlossen sein können. Durch die Wabenstruktur erhält der äußere Rohrkörper trotz Materialeinsparung eine mechanisch hochbelastbare Struktur, und durch die Wabenstruktur bleiben zwischen den Öffnungen in gewisser Weise Stege übrig, die in der Größe, Länge und den Querschnitt so bestimmt werden können, dass die Wärmeleitung im äußeren Rohrkörper gezielt beeinflusst werden kann, um eine möglichst optimale Wärmeverteilung im Grundkörper zu erreichen.

Darüber hinaus können alle oder wenigstens einige der Öffnungen einen Verschlusseinsatz aufweisen, der den zunächst freien Durchgang vom umlaufenden Hohlraum zur Außenseite des äußeren Rohrkörpers verschließt. Die Anzahl der Verschlusseinsätze in Bezug auf die Anzahl der Öffnungen kann in Richtung zur Düsenspitze hin abnehmen undloder es ist vorgesehen, dass die Öffnungen, die an den Bereich der Düsenspitze angrenzen, frei von Verschlusseinsätzen ausgebildet sind und die Öffnungen, die sich in Richtung zur Kanaleintrittsseite im äußeren Rohrkörper befinden, weisen vermehrt Verschlusseinsätze auf.

Die Verschlusseinsätze sind in den näher an der Kanaleintrittsseite liegenden Öffnungen von der Außenoberfläche des äußeren Rohrkörpers gesehen tiefer liegend in den Öffnungen eingebracht. Die Verschlusseinsätze sind vorzugsweise einteilig mit dem äußeren Rohrkörper und damit mit dem Grundkörper im generativen Fertigungsverfahren hergestellt. Die Verschlusseinsätze bilden in gewisser Weise Verschlussplatten, die senkrecht zur Durchtrittsöffnung der mit den Waben gebildeten Öffnungen ausgerichtet sind, sodass die Mittelachse der Öffnung der Wabe in der Wabenstruktur zugleich die Flächennormale für den Verschlusseinsatz bildet.

Das Vorhandensein eines Verschlusseinsatzes und auch die axiale Position innerhalb der Öffnung, nämlich ob der Verschlusseinsatz eher zur Außenseite oder zur Innenseite des äußeren Rohrkörpers hin eingerichtet ist, bildet weitere Merkmale, um den Wärmefluss im äußeren Rohrkörper gezielt zu beeinflussen.

Tritt die Kunststoffschmelze mit hoher Temperatur über die Kanaleintrittsseite in den Durchtrittskanal und damit in den inneren Rohrkörper ein, so folgt nach dem Sockelabschnitt zunächst ein umlaufender Hohlraum, der ein sehr kleines radiales Maß aufweist. Insofern befindet sich die Innenfläche des äußeren Rohrkörpers sehr dicht vor der Außenfläche des inneren Rohrkörpers, und es kann ein Wärmeübergang vom inneren Rohrkörper zum äußeren Rohrkörper verstärkt stattfinden.

Mit zunehmendem Verlauf des Durchtrittskanals in Richtung zur Düsenspitze vergrößert sich das radiale Maß des umlaufenden Hohlraums, und der Wärmeübergang vom inneren Rohrkörper zum äußeren Rohrkörper verringert sich. Die Kühlung der Kunststoffschmelze bei Eintritt in das Düsenrohr ist folglich zunächst höher und nimmt mit weiterem Verlauf in Richtung zur Düsenspitze ab. Im Bereich der Düsenspitze ist ein Heizdraht auf dem Grundkörper aufgebracht, sodass über den Heizdraht wieder ein Wärmeeintrag in dem Grundkörper stattfinden kann, sodass auch bei bereits längerem Durchlauf der Kunststoffschmelze durch den Durchtrittskanal die Temperatur auf das geforderte Niveau gebracht wird und die Kunststoffschmelze entsprechend temperiert bleibt.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt
- Figur 1: eine Seitenansicht der Heißkanaldüse,
- Figur 2: eine Seitenansicht der Heißkanaldüse in einer Querschnittsansicht,
- Figur 3: eine weitere Außenansicht der Heißkanaldüse und
- Figur 4: eine Querschnittsansicht der Heißkanaldüse in der in Figur 3 gezeigten Position.

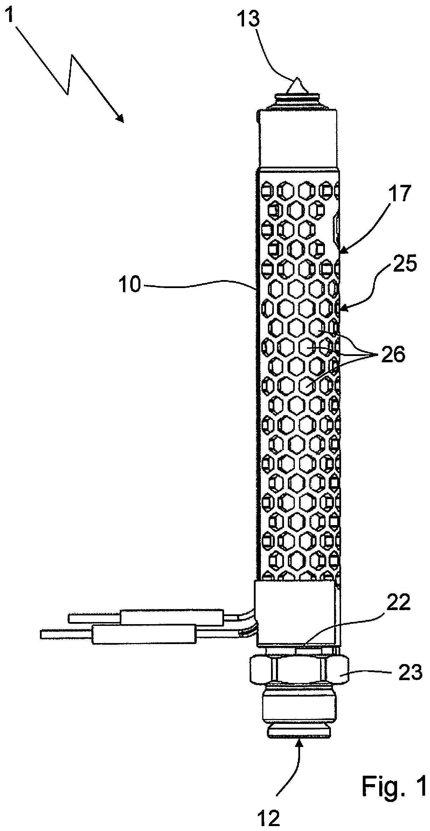

Figur 1 zeigt eine Seitenansicht einer Heißkanaldüse 1 für Spritzgießformen, und die Heißkanaldüse 1 weist als wesentlicher Bestandteil ein Düsenrohr 10 auf, das auf der Unterseite eine Kanaleintrittsseite 12 besitzt und auf der Oberseite mit einer Düsenspitze 13 abschließt. Die Oberseite oder obere Seite der Heißkanaldüse 1 beschreibt die obere Seite in der Bildebene, die mit der Düsenspitze 13 abschließt. Die Unterseite oder untere Seite beschreibt die untere Seite in der Bildebene, die mit der Kanaleintrittsseite 12 abschließt, in die die Kunststoffschmelze eingebracht wird. Der untere Bereich des Düsenrohre 10 weist einen Sockelabschnitt 22 auf, auf dem eine Befestigungsmutter 23 aufgebracht ist. Der wesentliche Bestandteil des Grundkörpers 17 der Heißkanaldüse 1 wird folglich gebildet durch das Düsenrohr 10, das eine Wabenstruktur 25 mit einer entsprechenden Anzahl von Öffnungen 26 aufweist.

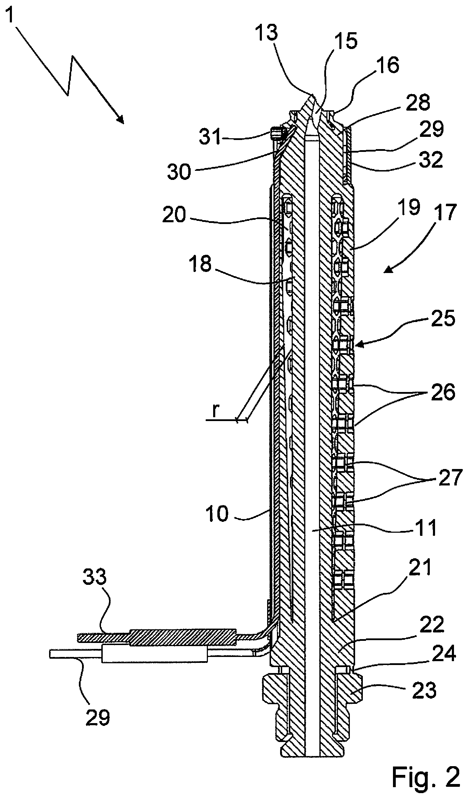

Figur 2 zeigt in einer Querschnittsansicht die Heißkanaldüse 1 mit dem Grundkörper 17 ausweisend das Düsenrohr 10, das in einen inneren Rohrkörper 18 und in einen äußeren Rohrkörper 19 unterteilt ist. Der radiale Spalt zwischen den beiden Rohrkörpern 18 und 19 wird durch einen umlaufenden Hohlraum 20 gebildet. Der umlaufende Hohlraum 20 erstreckt sich dabei im Wesentlichen von der unteren Seite mit dem Sockelabschnitt 22 bis unter die Düsenspitze 13, die von einem Anlagekragen 16 umschlossen ist.

Innerhalb des inneren Rohrkörpers 18 ist ein Durchtrittskanal 11 zum Hindurchführen der Kunststoffschmelze eingebracht, wobei der Durchtrittskanal 11 unterhalb der Düsenspitze 13 endet und in einen Austrittskanal 15 übergeht. Die Düsenspitze 13 ist mit einem Anlagekragen 16 umschlossen, und unterhalb des Anlagekragens 16 schließt sich ein mäanderförmig um den Grundkörper 17 aufgebrachter Heizdraht 29 an.

Die Querschnittsansicht zeigt die geometrische Ausgestaltung des umlaufenden Hohlraums 20. Dieser beginnt im Bereich des Sockelabschnitts 22 in einem Übergangsbereich 21, und mit dem Verlauf des Hohlraums 20 in Richtung zur Düsenspitze 13 nimmt das radiale Maß kontinuierlich zu. Im inneren Rohrkörper 18 ist der Durchtrittskanal 11 ausgebildet, wobei der innere Rohrkörper 18 im Wesentlichen einen gleichbleibenden Rohrquerschnitt aufweist, wobei lediglich unterhalb der Düsenspitze 13 ein abweichender Bereich vorhanden ist. Der äußere Rohrkörper 19 weist einen im Wesentlichen konstanten Außendurchmesser auf, wobei der Innendurchmesser des äußeren Rohrkörpers 19 in Richtung zur Düsenspitze 13 kontinuierlich zunimmt, wodurch sich das nach oben anwachsende radiale Maß r ergibt.

In der Düsenspitze 13 ist ein Temperaturmesssensor 30 aufgenommen, der über ein Signalkabel 31 mit einer entsprechenden Messeinrichtung verbunden wird. Der Temperaturmesssensor 30 ist dabei mit einem Schraubelement 31 in der Düsenspitze 13 gehalten, und an den Temperaturmesssensor 30 schließt sich ein Signalkabel 33 an. Außenseitig um den Heizdraht 29 im Bereich unterhalb der Düsenspitze 13 ist eine Sicherungshülse 32 aufgebracht, die den Heizdraht 29 auf dem Außenumfang des oberseitigen Abschnittes des Grundkörpers 17 hält und diesen schützt.

Der äußere Rohrkörper 10 weist eine Wabenstruktur 25 auf, die durch Öffnungen 26 gebildet ist, die eine sechseckige Innenkontur aufweisen. Einige der Öffnungen 26 bilden einen freien Durchgang vom umlaufenden Hohlraum 20 zur Außenseite des äußeren Rohrkörpers 19, wobei ferner Öffnungen 26 vorgesehen sind, in denen ein Verschlusseinsatz 27 eingebracht ist. Der Verschlusseinsatz 27 kann dabei in verschiedenen Tiefen in den Öffnungen 26 eingebracht sein, wobei mit zunehmendem Abstand von der Düsenspitze 13 weg die Einbringtiefe der Verschlusseinsätze 27 in den Öffnungen 26 von der Außenseite des äußeren Rohrkörpers 19 betrachtet weiter zunimmt.

Auf dem unterseitigen Sockelabschnitt 22 ist eine Befestigungsmutter 23 aufgebracht, die im aktuell gezeigten Zustand noch mit Haltemitteln 24 am Grundkörper 17 befestigt ist. Für den späteren Einsatz der Heißkanaldüse 1 werden die Haltemittel 24 mechanisch durchtrennt, und die Befestigungsmutter 23 kann dazu dienen, die Heißkanaldüse 1 an einer Verteilerplatte zu montieren. Mit besonderem Vorteil wird die Befestigungsmutter 23 gemeinsam mit dem Grundkörper 17 im generativen Fertigungsverfahren hergestellt, sodass die Befestigungsmutter 23 verliersicher, da formschlüssig, jedoch lose beweglich auf dem Sockelabschnitt 22 des Grundkörpers 17 aufgebracht ist.

Der umlaufende Hohlraum 20 erstreckt sich bis unter die Düsenspitze 13, wobei ein dickwandiger Stützabschnitt 28 unter der eigentlichen Düsenspitze 13 verbleibt, um dem vorderen Teil des Grundkörpers 17 eine entsprechende Stabilität zu verleihen. Der Übergang vom inneren Rohrkörper 18 zum äußeren Rohrkörper 19 erfolgt auf der Unterseite im Übergangsbereich 21 in Richtung zur Kanaleintrittsseite 12 eher spitz, wodurch die divergierende Gestalt des umlaufenden Hohlraums 20 mit größer werdendem radialen Maß r in Richtung zur Düsenspitze 13 resultiert, und der umlaufende Hohlraum 20 unterhalb des Stützabschnittes 28 ist mit einem Radius ausgeführt und weist daher eine eher stumpfe, umlaufende Kehle auf.

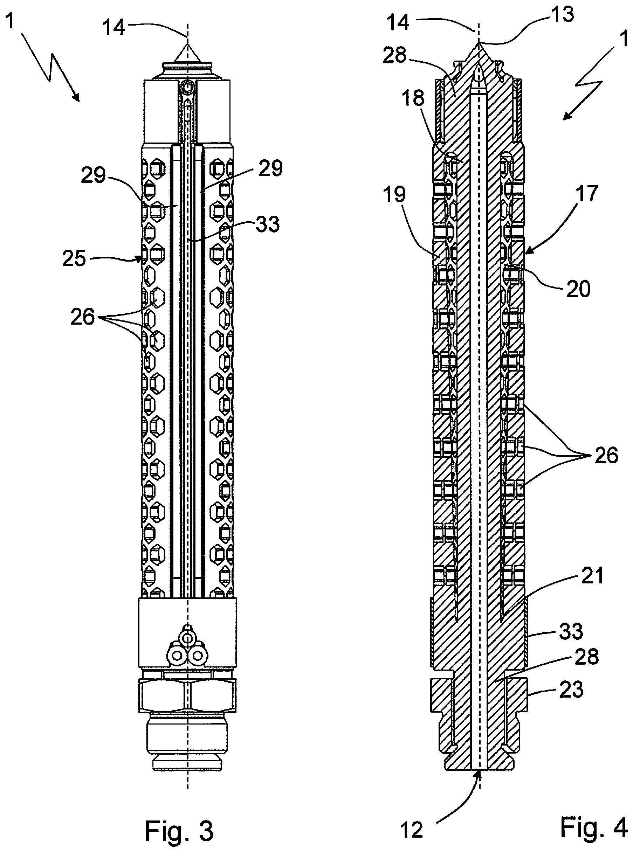

Die Figuren 3 und 4 zeigen noch einmal weitere Ansichten der Heißkanaldüse 1 in im Vergleich zu den Ansichten der Figuren 1 und 2 um die Mittelachse 14 rotierten Positionen. Figur 3 zeigt vorderseitig den Verlauf zweier Heizdrähte 29 mit einem dazwischen liegenden Signalkabel 33, sodass in diesem Bereich der Kabelführung der äußere Rohrkörper 19 unterbrechungsweise keine Wabenstruktur 25 aufweist, wobei seitlich von diesem Bereich der Kabelführung die Wabenstruktur 25 mit den Öffnungen 26 beginnt, und sich im Übrigen im Bereich des Düsenrohres 10 vollständig um den Grundkörper 17 herum erstreckt.

Figur 4 zeigt eine weitere geschnittene Ansicht der Heißkanaldüse 1 mit dem Grundkörper 17, wobei die Ansicht noch einmal den divergierenden Verlauf des umlaufenden Hohlraums 20 beginnend von dem Übergangsbereich 21 in Richtung zur Düsenspitze 13 darstellt. Unterhalb der Düsenspitze 13 folgt der massive Stützabschnitt 28, vor dem schließlich der umlaufende Hohlraum 22 endet.

Zur Sicherung des Heizdrahtes 29 und/oder des Signalkabels 33 ist im Austrittsbereich der Kabel eine weitere Sicherungshülse 32 aufgebracht, wobei diese wie auch die Befestigungsmutter 23 auf dem Sockelabschnitt 22 aufgebracht ist.

Die Darstellung in Figur 4 zeigt insbesondere die monolithische Ausführung des Grundkörpers 17 mit der Düsenspitze 13, dem sich anschließenden Stützbereich 28 direkt unterhalb der Düsenspitze 13 sowie dem Düsenrohr 10 mit dem unterseitigen Sockelabschnitt 22 bis hin zur Kanaleintrittsseite 12. Der innere Rohrkörper 18 und der äußere Rohrkörper 19 sind insofern einteilig miteinander ausgeführt, und die Heißkanaldüse 1 muss nicht aus mehreren Komponenten montiert werden, sodass etwa ein innerer Rohrkörper 18 in einen äußeren Rohrkörper 19 eingesetzt werden müsste. Der Vorteil wird im Wesentlichen erreicht durch die Nutzung eines generativen Fertigungsverfahrens, sodass der Grundkörper 17 insgesamt als monolithisch bezeichnet werden kann.

### Bezugszeichenliste:

- 1: Heißkanaldüse
- 10: Düsenrohr
- 11: Durchtrittskanal
- 12: Kanaleintrittsseite
- 13: Düsenspitze
- 14: Mittelachse
- 15: Austrittskanal
- 16: Anlagekragen
- 17: Grundkörper
- 18: innerer Rohrkörper
- 19: äußerer Rohrkörper
- 20: umlaufender Hohlraum
- 21: Übergangsbereich
- 22: Sockelabschnitt
- 23: Befestigungsmutter
- 24: Haltemittel
- 25: Wabenstruktur
- 26: Öffnung
- 27: Verschlusseinsatz
- 28: Stützabschnitt
- 29: Heizdraht
- 30: Temperaturmesssensor
- 31: Schraubelement
- 32: Sicherungshülse
- 33: Signalkabel
- r: radiales Maß

## Patentansprüche

1. Heißkanaldüse (1) für Spritzgießformen, aufweisend ein Düsenrohr (10), in dem ein Durchtrittskanal (11) zum Durchtritt einer Kunststoffschmelze ausgebildet ist, wobei sich der Durchtrittskanal (11) von einer rückseitigen Kanaleintrittsseite (12) bis zu einer vorderseitigen Düsenspitze (13) entlang einer Mittelachse (14) erstreckt und in wenigstens einem Austrittskanal (15) in der Düsenspitze (13) mündet, durch den die Kunststoffschmelze austreibbar ist, wobei ein Anlagekragen (16) zur dichtenden Anlage gegen die Spritzgießform vorgesehen ist, **dadurch gekennzeichnet, dass** wenigstens das Düsenrohr (10) mittels eines generativen Fertigungsverfahrens als einteiliger Grundkörper (17) hergestellt ist, und
dass das Düsenrohr (10) einen inneren Rohrkörper (18) aufweist, in dem der Durchtrittskanal (11) ausgebildet ist und wobei das Düsenrohr (10) einen den inneren Rohrkörper (18) umschließenden äußeren Rohrkörper (19) aufweist, sodass sich zwischen dem inneren Rohrkörper (18) und dem äußeren Rohrkörper (19) ein umlaufender Hohlraum (20) erstreckt.

2. Heißkanaldüse (1) nach Anspruch 1,
**dadurch gekennzeichnet,**
**dass** der umlaufende Hohlraum (20) zwischen dem inneren Rohrkörper (18) und dem äußeren Rohrkörper (19) ein radiales Maß (r) aufweist, das von der Kanaleintrittsseite (12) zur Düsenspitze (13) hin stufenweise oder vorzugsweise kontinuierlich größer wird.

3. Heißkanaldüse (1) nach Anspruch 1 oder 2,
**dadurch gekennzeichnet,**
**dass** der innere Rohrkörper (18) einen über seiner überwiegenden Länge einen gleichbleibenden Außendurchmesser aufweist.

4. Heißkanaldüse (1) nach Anspruch 1 bis 3,
**dadurch gekennzeichnet,**
**dass** der äußere Rohrkörper (19) über seiner überwiegenden Länge einen in Richtung zur Düsenspitze (13) größer werdenden Innendurchmesser aufweist, sodass die Wandstärke des äußeren Rohrkörpers (19) in Richtung zur Düsenspitze (13) abnimmt.

5. Heißkanaldüse (1) nach Anspruch 4,
**dadurch gekennzeichnet,**
**dass** die Außenfläche des inneren Rohrkörpers (18) und die Innenfläche des äußeren Rohrkörpers (19) in einem nahe der Kanaleintrittsseite (12) liegenden Übergangsbereich (21) zu einer unterbrechungsfreien gemeinsamen Rohrwandung des Düsenrohres (10) übergehen, sodass sich in Richtung zur Kanaleintrittsseite (12) ein dickwandiger Sockelabschnitt (22) an den inneren und äußeren Rohrkörper (18, 19) anschließt.

6. Heißkanaldüse (1) nach Anspruch 5,
**dadurch gekennzeichnet,**
**dass** der Sockelabschnitt (22) mit der Kanaleintrittsseite (12) endet, wobei eine Befestigungsmutter (23) im Bereich der Kanaleintrittsseite (12) verliersicher aufgebracht ist.

7. Heißkanaldüse (1) nach Anspruch 6,
**dadurch gekennzeichnet,**
**dass** die Befestigungsmutter (23) mittels wenigstens einem durchtrennbaren Haltemittel (24) mit dem Sockelabschnitt (22) verbunden ist.

8. Heißkanaldüse (1) nach einem der vorgenannten Ansprüche,
**dadurch gekennzeichnet,**
**dass** der äußere Rohrkörper (19) eine Wabenstruktur (25) aufweist.

9. Heißkanaldüse (1) nach Anspruch 8,
**dadurch gekennzeichnet,**
**dass** die Wabenstruktur (25) Öffnungen (26) im äußeren Rohrkörper (19) bildet, die eine sechseckige Kontur aufweisen.

10. Heißkanaldüse (1) nach Anspruch 9,
**dadurch gekennzeichnet,**
**dass** einige der Öffnungen (26) einen freien Durchgang vom umlaufenden Hohlraum (20) zur Außenseite des äußeren Rohrkörpers (19) bilden.

11. Heißkanaldüse (1) nach Anspruch 9 oder 10,
**dadurch gekennzeichnet,**
**dass** einige der Öffnungen (26) einen Verschlusseinsatz (27) aufweisen, der den sonst freien Durchgang vom umlaufenden Hohlraum (20) zur Außenseite des äußeren Rohrkörpers (19) verschließt.

12. Heißkanaldüse (1) nach Anspruch 11,
**dadurch gekennzeichnet,**
**dass** die Anzahl der Verschlusseinsätze (27) in Bezug auf die Anzahl der Öffnungen (26) in Richtung zur Düsenspitze (13) hin abnimmt oder dass die Öffnungen (26), die an den Bereich der Düsenspitze (13) angrenzen, frei von Verschlusseinsätzen (27) ausgebildet sind und die Öffnungen (26), die sich in Richtung zur Kanaleintrittsseite (12) im äußeren Rohrkörper (19) befinden, vermehrt Verschlusseinsätze (27) aufweisen.

13. Heißkanaldüse (1) nach Anspruch 11 oder 12,
**dadurch gekennzeichnet,**
**dass** die Verschlusseinsätze (27) in den näher an der Kanaleintrittsseite (12) liegenden Öffnungen (26) von der Außenoberfläche des äußeren Rohrkörpers (19) gesehen tiefer liegend in den Öffnungen (26) eingebracht sind.

14. Heißkanaldüse (1) nach einem der vorgenannten Ansprüche,
**dadurch gekennzeichnet,**
**dass** der umlaufende Hohlraum (20) sich bis unter die Düsenspitze (13) erstreckt, wobei sich oberhalb des umlaufenden Hohlraums (20) ein dickwandiger Stützabschnitt (28) unter der Düsenspitze (13) anschließt.

15. Heißkanaldüse (1) nach einem der vorgenannten Ansprüche,
**dadurch gekennzeichnet,**
**dass** das Düsenrohr (10), die Düsenspitze (13) und der Anlagekragen (16) mittels eines generativen Fertigungsverfahrens als einteiliger Grundkörper (17) hergestellt sind.

## Claims

1. A hot runner nozzle (1) for injection molds comprising a nozzle pipe (10) in which a passage channel (11) for the passage of a plastic melt is formed, wherein the passage channel (11) extends along a center axis (14) from a rear side channel inlet side (12) up to a front side nozzle tip (13) and opens in at least one outlet channel (15) in the nozzle tip (13) through which the plastic melt can be driven, with a contact collar 16 for sealing contact with the injection mold being provided,
**characterized in that**
at least the nozzle pipe (10) is manufactured by means of a generative production process as a single-part base member (17); and **in that** the nozzle pipe (10) has an inner pipe member (18) in which the passage channel (11) is formed and with the nozzle pipe (10) having an outer pipe member (19) surrounding the inner pipe member (18) so that a peripheral hollow space (20) extends between the inner pipe member (18) and the outer pipe member (19).

2. A hot runner nozzle (1) in accordance with claim 1,
**characterized in that**
the peripheral hollow space (20) has a radial dimension (r) between the inner pipe member (18) and the outer pipe member (19), said radial dimension (r) becoming larger stepwise, or preferably continuously, from the channel inlet side (12) to the nozzle tip (13).

3. A hot runner nozzle (1) in accordance with claim 1 or claim 2,
**characterized in that**
the inner pipe member (18) has an outer diameter unchanging over its predominant length.

4. A hot runner nozzle (1) in accordance with claims 1 to 3,
**characterized in that**
the outer pipe member (19) has an inner diameter becoming larger in the direction toward the nozzle tip (13) over its predominant length so that the wall thickness of the outer pipe member (19) decreases in the direction toward the nozzle tip (13).

5. A hot runner nozzle (1) in accordance with claim 4,
**characterized in that**
the outer surface of the inner pipe member (18) and the inner surface of the outer pipe member (19) in particular merge in a transition zone (21) disposed close to the channel inlet side (12) to form an uninterrupted common pipe wall of the nozzle pipe (10) so that a thick-walled pedestal section (22) adjoins the inner and outer pipe members (18, 19) in the direction toward the channel inlet side (12).

6. A hot runner nozzle (1) in accordance with claim 5,
**characterized in that**
the pedestal section (22) ends with the channel inlet side (12), with a fastening nut (23) being captively applied in the region of the channel inlet side (12).

7. A hot runner nozzle (1) in accordance with claim 6,
**characterized in that**
the fastening nut (23) is connected to the pedestal section (22) by means of at least one severable holding means (24).

8. A hot runner nozzle (1) in accordance with one of the preceding claims,
**characterized in that**
the outer pipe member (19) has a honeycomb structure (25).

9. A hot runner nozzle (1) in accordance with claim 8,
**characterized in that**
the honeycomb structure (25) forms openings (26) in the outer pipe member (19) that have a hexagonal contour.

10. A hot runner nozzle (1) in accordance with claim 9,
**characterized in that**
some of the openings (26) form a free passage from the peripheral hollow space (20) to the outer side of the outer pipe member (19).

11. A hot runner nozzle (1) in accordance with one of the preceding claims"
**characterized in that**
some of the openings (26) have a closure insert (27) that closes the otherwise free passage from the peripheral hollow space (20) to the outer side of the outer pipe member (19).

12. A hot runner nozzle (1) in accordance with claim 11,
**characterized in that**
the number of closure inserts (27) with respect to the number of openings (26) reduce in the direction toward the nozzle tip; and/or **in that** the openings (26) adjacent to the region of the nozzle tip (13) are free of closure inserts (27) and the openings (26) that are in the direction toward the channel inlet side (12) in the outer pipe member (29) have added closure inserts (27).

13. A hot runner nozzle (1) in accordance with claim 11 or claim 12,
**characterized in that**
the closure inserts (27) are introduced more deeply in the openings (26) in the openings (26) disposed closer to the channel inlet side (12) viewed from the outer surface of the outer pipe member (19).

14. A hot runner nozzle (1) in accordance with one of the preceding claims,
**characterized in that**
the peripheral hollow space (20) extends up to and below the nozzle tip (13), with a thick-walled support section (28) adjoining below the nozzle tip (13) above the peripheral hollow space (20).

15. A hot runner nozzle (1) in accordance with one of the preceding claims,
**characterized in that**
the nozzle pipe (10), the nozzle tip (13), and the contact collar (16) are manufactured by means of a generative production process as a single-part base member (17).

## Revendications

1. Buse de canal chaud (1) pour moules de moulage par injection, présentant un tube de buse (10), dans lequel un canal de passage (11) est réalisé pour le passage d'une matière plastique fondue, le canal de passage (11) s'étendant depuis un côté entrée de canal (12) arrière jusqu'à une pointe de buse (13) avant le long d'un axe central (14) et débouchant dans au moins un canal de sortie (15) dans la pointe de buse (13), à travers lequel la matière plastique fondue peut être expulsée, un collet d'appui (16) étant prévu pour l'appui étanchéifiant contre le moule de moulage par injection, **caractérisée en ce qu'**au moins le tube de buse (10) est fabriqué comme corps de base (17) en une seule pièce au moyen d'un procédé de fabrication additive et **en ce que** le tube de buse (10) présente un corps de tube intérieur (18), dans lequel le canal de passage (11) est formé et le tube de buse (10) présentant un corps de tube extérieur (19) entourant le corps de tube intérieur (18), de telle sorte qu'une cavité périphérique (20) s'étend entre le corps de tube intérieur (18) et le corps de tube extérieur (19).

2. Buse de canal chaud (1) selon la revendication 1,
**caractérisée en ce que**
la cavité périphérique (20) présente, entre le corps de tube intérieur (18) et le corps de tube extérieur (19), une mesure radiale (r), qui augmente par paliers ou de préférence en continu depuis le côté entrée de canal (12) jusqu'à la pointe de buse (13).

3. Buse de canal chaud (1) selon la revendication 1 ou 2,
**caractérisée en ce que**
le corps de tube intérieur (18) présente, sur la majeure partie de sa longueur, un diamètre extérieur constant.

4. Buse de canal chaud (1) selon les revendications 1 à 3,
**caractérisée en ce que**
le corps de tube extérieur (19) présente, sur la majeure partie de sa longueur, un diamètre intérieur augmentant en direction de la pointe de buse (13), de telle sorte que l'épaisseur de paroi du corps de tube extérieur (19) diminue en direction de la pointe de buse (13).

5. Buse de canal chaud (1) selon la revendication 4,
**caractérisée en ce que**
la surface extérieure du corps de tube intérieur (18) et la surface intérieure du corps de tube extérieur (19) se fondent en une paroi de tube commune ininterrompue du tube de buse (10) dans une zone de transition (21) située à proximité du côté entrée de canal (12), de telle sorte que, en direction du côté entrée de canal (12), une partie socle (22) à paroi épaisse se trouve dans le prolongement des corps de tube intérieur et extérieur (18, 19).

6. Buse de canal chaud (1) selon la revendication 5,
**caractérisée en ce que**
la partie socle (22) se termine avec le côté entrée de canal (12), un écrou de fixation (23) étant placé de manière imperdable dans la zone du côté entrée de canal (12).

7. Buse de canal chaud (1) selon la revendication 6,
**caractérisée en ce que**
l'écrou de fixation (23) est relié à la partie socle (22) au moyen d'au moins un moyen de retenue (24) pouvant être sectionné.

8. Buse de canal chaud (1) selon l'une des revendications précédentes,
**caractérisée en ce que**
le corps de tube extérieur (19) présente une structure en nid d'abeille (25).

9. Buse de canal chaud (1) selon la revendication 8,
**caractérisée en ce que**
la structure en nid d'abeille (25) forme des ouvertures (26) dans le corps de tube extérieur (19), qui présentent un contour hexagonal.

10. Buse de canal chaud (1) selon la revendication 9,
**caractérisée en ce que**
quelques unes des ouvertures (26) forment un passage libre de la cavité périphérique (20) au côté extérieur du corps de tube extérieur (19).

11. Buse de canal chaud (1) selon la revendication 9 ou 10,
**caractérisée en ce que**
quelques unes des ouvertures (26) présentent un élément encastrable de fermeture (27), qui ferme le passage sinon libre de la cavité périphérique (20) au côté extérieur du corps de tube extérieur (19).

12. Buse de canal chaud (1) selon la revendication 11,
**caractérisée en ce que**
le nombre des éléments encastrables de fermeture (27) diminue par rapport au nombre des ouvertures (26) en direction de la pointe de buse (13) ou **en ce que** les ouvertures (26) qui sont adjacentes à la zone de la pointe de buse (13) sont réalisées sans élément encastrable de fermeture (27) et les ouvertures (26) qui se trouvent dans le corps de tube extérieur (19) en direction du côté entrée de canal (12) présentent davantage d'éléments encastrables de fermeture (27).

13. Buse de canal chaud (1) selon la revendication 11 ou 12,
**caractérisée en ce que**
les éléments encastrables de fermeture (27) dans les ouvertures (26) situées plus près du côté entrée de canal (12) sont placés, vus depuis la surface extérieure du corps de tube extérieur (19), plus profondément dans les ouvertures (26).

14. Buse de canal chaud (1) selon l'une des revendications précédentes,
**caractérisée en ce que**
la cavité périphérique (20) s'étend jusque sous la pointe de buse (13), une partie de support (28) à paroi épaisse se trouvant dans le prolongement au-dessus de la cavité périphérique (20) et sous la pointe de buse (13).

15. Buse de canal chaud (1) selon l'une des revendications précédentes,
**caractérisée en ce que**
le tube de buse (10), la pointe de buse (13) et le collet d'appui (16) sont fabriqués comme corps de base (17) en une seule pièce au moyen d'un procédé de fabrication additive.
